# EUROPÄISCHE PATENTSCHRIFT

(11) **EP 1 390 415 B1**
(45) Veröffentlichungstag und Bekanntmachung des Hinweises auf die Patenterteilung: **04.07.2007**
(21) Anmeldenummer: 02745195.4
(22) Anmeldetag: 22.03.2002
(51) Int. Cl.: C08F 8/28, C08K 5/1535

(54) **HOCHMOLEKULARE, VERNETZTE POLYVINYLBUTYRALE, VERFAHREN ZU DEREN HERSTELLUNG SOWIE DEREN VERWENDUNG**
HIGH-MOLECULAR, CROSS-LINKED POLYVINYLBUTYRALS, METHOD FOR THE PRODUCTION AND USE THEREOF
BUTYRALS DE POLYVINYLE RETICULES A POIDS MOLECULAIRE ELEVE ET PROCEDE DE PRODUCTION ET D'UTILISATION DESDITS BUTYRALS

(30) Priorität: 28.03.2001 DE 10115222
(43) Veröffentlichungstag der Anmeldung: 25.02.2004
(73) Patentinhaber: Ciba Specialty Chemicals Holding Inc., 4057 Basel (CH)
(72) Erfinder: PAPENFUHS, Bernd, 63179 Obertshausen (DE)
(86) Internationale Anmeldenummer: PCT/EP2002/003218
(87) Internationale Veröffentlichungsnummer: WO 2002/092644

(56) Entgegenhaltungen:
- EP-A- 0 211 818
- EP-A- 0 211 819
- EP-A- 0 891 989
- DE-A- 4 330 354
- US-A- 2 448 260
- US-A- 5 955 619

## Beschreibung

Die vorliegende Erfindung betrifft neue, hochmolekulare, vernetzte Polyvinylbutyrale, Verfahren zu deren Herstellung sowie deren Verwendung.

Bekannt ist, Polyvinylbutyrale zusammen mit Weichmachern durch Extrusion zu Folien zu verarbeiten, die insbesondere zur Herstellung von Sicherheitsverbundgläsern eingesetzt werden.

Zur Erhöhung des Molekulargewichtes solcher Polyvinylbutyrale wird in der EP-A-0 211 818 vorgeschlagen, Polyvinylbutyrale durch stabile intermolekulare Diacetalverknüpfungen, zu vernetzen. Die Vernetzung erfolgt dabei durch Aldehyde mit mindestens zwei Aldehydgruppen. Das Vernetzungsmittel wird dabei vor oder während der Acetalisierung der Polyvinylalkohole mit Butyraldehyd zugegeben.

Die Vernetzung von Polyvinylbutyralen mit Dialdehyden führt jedoch aufgrund der hohen Reaktivität der Aldehyde zu stark vernetzten, sehr hochmolekularen und daher teilweise unlöslichen Polyvinylbutyralen. Darüber hinaus ist die Vernetzungsreaktion aufgrund der geringen Selektivität nur schwer kontrollierbar, wodurch die Herstellung reproduzierbarer Produktqualitäten sehr schwierig ist.

Der vorliegenden Erfindung lag somit die Aufgabe zugrunde, Polyvinylbutyrale zur Verfügung zu stellen, die eine höhere mechanische Festigkeit aufweisen als nicht vernetzte Produkte und die sich darüber hinaus noch reproduzierbar herstellen lassen.

Überraschenderweise wurde gefunden, dass sich hochmolekulare Polyvinylbutyrale durch Vernetzung mit Benzofuranon oder dessen Derivaten reproduzierbar herstellen lassen.

Diese Verbindungen werden normalerweise als Stabilisatoren für verschiedene Polymere eingesetzt, wobei sie einen Molekulargewichts-Abbau durch thermische oder mechanische Belastung effektiv vermindern. Dass sie dagegen dem Abbau des Molekulargewichts sogar durch einen Aufbau desselben entgegenwirken und sich somit als Vemetzungsadditive eignen, ist völlig neu und darüber hinaus auch absolut unerwartet.

Gegenstand der vorliegenden Erfindung sind somit hochmolekulare, vernetzte Polyvinylbutyrale erhältlich durch Vernetzung eines Polyvinylbutyrals mit Benzofuranon und/oder mindestens einem Derivat desselben als Vemetzungsreagenz.

Bevorzugte Vernetzungsreagenzien sind Verbindungen der Formel (I) 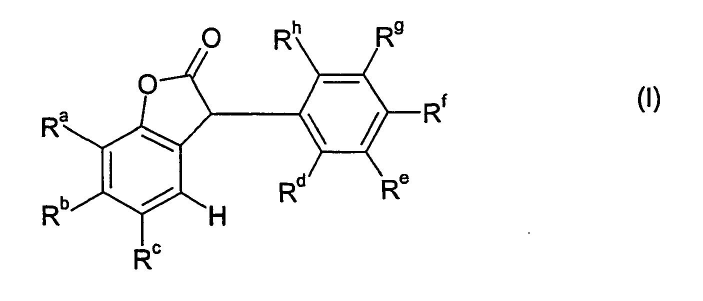 worin R^{a}, R^{b}, R^{d}, R^{e}, R^{f}, R^{g} und R^{h} unabhängig voneinander Wasserstoff, Hydroxy, C₁-C₁₈-Alkyl, unsubstituiertes oder durch C₁-C₄-Alkyl mono-, di- oder trisubstituiertes Phenyl, C₇-C₉-Phenylalkyl, unsubstituiertes oder durch C₁-C₄-Alkyl mono-, di- oder trisubstituiertes C₅-C₁₂-Cycloalkyl oder C₁-C₁₈-Alkoxy bedeuten und R^{c} eine der oben für R^{a}, R^{b}, R^{d}, R^{e}, R^{f}, R^{g} und R^{h} angegebenen Bedeutungen besitzt oder einen Rest der Formel (II) 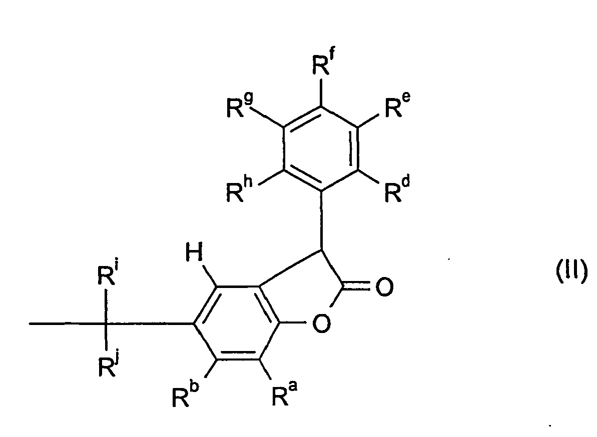 bedeutet, worin R^{a}, R^{b}, R^{d}, R^{e}, R^{f}, R^{g} und R^{h} die oben angegebenen Bedeutungen besitzen und R' und Rⁱ unabhängig voneinander Wasserstoff oder C₁-C₄-Alkyl bedeuten, wobei mindestens zwei der Reste R^{d}, R^{e}, R^{f}, R^{g} und R^{h} Wasserstoff bedeuten.

Besonders bevorzugte Vernetzungsreagenzien sind Verbindungen der Formel (1), worin
- R^{b}: Wasserstoff bedeutet und/oder
- R^{d} bis R^{h}: Wasserstoff bedeuten und/oder
- R^{a} und R^{c}: C₁-C₁₈-Alkyl, insbesondere tert.-Butyl, oder unsubstituiertes oder durch
C₁-C₄-Alkyl mono-, di- oder trisubstituiertes Phenyl
bedeuten.

Wenn R^{c} einen Rest der Formel (II) bedeutet, dann bedeuten Rⁱ und R^{j} vorzugsweise beide Methyl.

Durch welche Struktureinheit die Polyvinylbutyral-Moleküle miteinander verknüpft sind kann nicht beschrieben werden, da der Vernetzungsmechanismus mittels Benzofuranon-Derivaten nicht bekannt ist.

Die erfindungsgemäßen Polyvinylbutyrale zeichnen sich durch eine deutliche Erhöhung der mechanischen Festigkeit gegenüber herkömmlichen Produkten aus.

Als Ausgangsmaterialien können alle dem Fachmann bekannten Polyvinylbutyrale eingesetzt werden, d.h. die Ausgangs-Polyvinylbutyrale sind hinsichtlich des Molekulargewichts in keinster Weise beschränkt. Vorzugsweise werden jedoch Polyvinylbutyrale mit einem Molekulargewicht von mindestens 50 000 g/mol eingesetzt. Die Polyvinylalkoholgehalte der als Ausgangsmaterialien eingesetzten Polyvinylbutyrale liegen vorzugsweise zwischen 10 und 25 Gew.-% und besonders bevorzugt zwischen 16 und 23 Gew.-%. Die Polyvinylacetatgehalte der als Ausgangsmaterialien eingesetzten Polyvinylbutyrale liegen vorzugsweise zwischen 0 und 20 Gew.-%.

Die erfindungsgemäß hergestellten, hochmolekularen, vernetzten Polyvinylbutyrale enthalten in einer bevorzugten Ausführungsform Weichmacher oder Weichmacher-Mischungen. Als Weichmacher können dabei alle dem Fachmann bekannten Weichmacher eingesetzt werden, insbesondere Ester von mehrwertigen Säuren, mehrwertigen Alkoholen oder Oligoetherglykolen. Bevorzugte Weichmacher sind z.B. Diester von aliphatischen Diolen sowie von aliphatischen Polyetherdiolen bzw. von Polyetherpolyolen, mit aliphatischen Carbonsäuren, vorzugsweise Diester von Polyalkylenoxiden, insbesondere Diester des Di-, Tri- und Tetraethylenglykols mit aliphatischen oder aromatischen (C₆-C₁₂)-Carbonsäuren, ferner Diester von aliphatischen oder aromatischen (C₂-C₁₈)-Dicarbonsäuren mit aliphatischen (C₄-C₁₂)- Alkoholen, vorzugsweise Dihexyladipat sowie Mischungen der genannten Ester. Der Weichmacher wird dabei in den dem Fachmann bekannten, üblichen Mengen eingesetzt, wobei der Weichmachergehalt vorzugsweise zwischen 25 und 80 Gewichtsteilen bezogen auf 100 Gewichtsteile PVB liegt.

Gegenstand der vorliegenden Anmeldung ist folglich auch ein Verfahren zur Herstellung der erfindungsgemäßen Polyvinylbutyrale, das dadurch gekennzeichnet ist, dass das Vernetzungsreagenz sowie gegebenenfalls der Weichmacher zum Polyvinylbutyral hinzugegeben werden, die Mischung gegebenenfalls homogenisiert wird und bei Temperaturen im Bereich von 80 bis 280°C thermisch vernetzt wird.

In einer bevorzugten Ausführungsform wird die Vernetzung durch alkalische oder saure Additive katalysiert.

Als alkalische bzw. saure Additive können beispielsweise Alkali- und/oder Erdalkali-hydroxide, -alkanoate, -carboxylate, -sulfate, -chloride, -nitrate, - phosphate bzw. freie organische und/oder anorganische Säuren sowie Amine eingesetzt werden.

Die Herstellung der erfindungsgemäßen, hochmolekularen, vernetzten Polyvinylbutyrale wird im Folgenden in einer bevorzugten Ausführungsform näher beschrieben, ohne dadurch jedoch beschränkt zu werden.

Das Vernetzungsreagenz kann zum Beispiel im Weichmacher gelöst zum Polyvinylbutyral hinzugegeben werden und anschließend kann die Mischung homogenisiert werden.

Die Konzentration des Vernetzungsreagenz liegt dabei vorzugsweise im Bereich von 0,001 bis 2,0 Gew.-%, besonders bevorzugt im Bereich von 0,005 bis 1,0 Gew.-% und insbesondere im Bereich von 0,01 bis 0,5 Gew.-%, jeweils bezogen auf Polyvinylbutyral.

Die thermische Vernetzung kann in allen dem Fachmann bekannten beheizbaren Aggregaten, wie z.B. Knetern oder Autoklaven, durchgeführt werden. Bevorzugt erfolgt die Vernetzung jedoch im Extruder, und zwar vorzugsweise bei Massetemperaturen im Bereich von 80 bis 280°C.

Begünstigt wird die Vernetzungsreaktion durch die Alkalinität des Polymeren, die üblicherweise zur Stabilisierung des Polyvinylbutyrals eingestellt wird.

Gegenstand der vorliegenden Anmeldung ist auch eine Formmasse enthaltend das erfindungsgemäße, hochmolekulare, vernetzte Polyvinylbutyral.

Durch den beschriebenen Extrusionsprozess lässt sich das erfindungsgemäße Polyvinylbutyral mit Hilfe einer Breitschlitzdüse auch direkt zu einer Folie verarbeiten. Verfahren zur Herstellung von Polyvinylbutyral-Folien sind dem Fachmann hinlänglich bekannt. Folien aus den erfindungsgemäßen, hochmolekularen, vernetzten Polyvinylbutyralen können noch weitere übliche Zusätze, wie z.B. Oxidationsstabilisatoren, UV-Stabilisatoren, Farbstoffe, Pigmente sowie Antihaftmittel, enthalten.

Gegenstand der vorliegenden Anmeldung ist somit auch eine Folie enthaltend das erfindungsgemäße, hochmolekulare, vernetzte Polyvinylbutyral.

Die Folien zeichnen sich durch eine erhöhte Reißfestigkeit aus, die insbesondere für die Herstellung von Sicherheitsverbundgläsem, dem Hauptanwendungsgebiet der Folien, von Vorteil ist.

Ein weiterer Gegenstand der vorliegenden Erfindung ist somit die Verwendung der erfindungsgemäßen Folien zur Herstellung von Sicherheitsverbundgläsem.

Die Erfindung wird im folgenden anhand von Ausführungsbeispielen ausführlich beschrieben, ohne dadurch jedoch beschränkt zu werden.

### Meßmethoden

### Polyvinylalkohol-Gehalt des PVB

Dazu wird das PVB mit einem Überschuss von Essigsäureanhydrid in Pyridin acetyliert. Nach der Umsetzung wird mit Wasser das überschüssige Essigsäureanhydrid hydrolysiert und die entstandene Essigsäure mit Natronlauge potentiometrisch titriert. Der PVOH-Gehalt wird anhand des Verbrauchs an Natronlauge errechnet.

### Polyvinylacetat-Gehalt des PVB

Dazu wird das PVB in einem Benzylalkohol/Ethanol-Gemisch gelöst. Die Acetylgruppen werden mit einem Überschuss alkoholischer Kalilauge verseift. Die überschüssige Kalilauge wird mit Salzsäure zurücktitriert. Der Polyvinylacetatgehalt wird anhand des Verbrauchs an Salzsäure errechnet.

### Alkalititer PVB

Dazu wird das PVB in Ethanol gelöst und mit 0,01 molarer Salzsäure bis zum Farbumschlag von grün nach violett titriert. Als Indikator wird ein Gemisch aus Methylenblau und Neutralrot verwendet. Der Alkalititer wird anhand des Verbrauchs an Salzsäure errechnet.

### Mw, Mn

Die Bestimmung der Molekulargewichte der in den Formmassen enthaltenen Polyvinylbutyrale erfolgt mittels Gelpermeationschromatographie (GPC) unter Verwendung von RI-Detektoren. Die Kalibrierung der Detektoren erfolgt mittels PVB-Eichstandards, deren Absolutwerte mittels statischer Lichtstreuung ermittelt werden; Meßwert-Angaben in g/mol.

### Reißfestigkeit

Vor Messung der Reißfestigkeit werden die Folien für 24 Stunden bei 23°C und einer relativen Luftfeuchtigkeit von 50 % klimatisiert. Die Messung der Reißfestigkeit erfolgt mit einer Zug- und Druckfestigkeitsprüfmaschine (Hersteller: Cadis GbR, Typ: BRP 201) gemäß DIN 53455; Meßwert-Angaben in N/mm².

### Schmelzindex

Die Folien werden vor Messung des Schmelzindexes 24 Stunden bei 23°C und einer relativen Luftfeuchte von 50 % klimatisiert. Die Messung der Folien erfolgt mit einem Schmelzindex-Prüfgerät (Hersteller: Göttfert, Typ: MP-D) bei 190°C mit einer Belastung von 2,16 kg unter Verwendung einer 2 mm-Düse gemäß ISO 1133; Messwert-Angaben in g/10 min.

### Beispiele und Vergleichsbeispiele

### Mischung und Extrusion

Polyvinylbutyrale (PVB), die typisch für die Herstellung von Folien für die Verbundsicherheitsglas-Produktion sind (analytische Kenndaten siehe unten), werden vor der Extrusion mit dem Weichmacher Triethylenglykol-di-n-heptanoat (Hersteller: Celanese AG) gemischt. Dies erfolgt in einem Brabender-Labormischer (Modell 826801 ).
In den erfindungsgemäßen Beispielen wird im Weichmacher vor Herstellung der Mischung noch eine bestimmte Menge des erfindungsgemäßen Vernetzungsreagenz gelöst. Aus den PVB/Weichmacher-Mischungen werden Flachfolien mit einer Dicke von 0,8 mm extrudiert.
Die Extrusionen erfolgen bei allen Beispielen und Vergleichsbeispielen auf einem Doppelschneckenextruder mit gegenlaufenden Schnecken (Hersteller: Haake), ausgerüstet mit Schmelzepumpe und Breitschlitzdüse, bei einer Massetemperatur von 190°C.

### Beispiele 1, 2 und 3 sowie Vergleichsbeispiel 4

Es werden jeweils 370 g PVB (Polyvinylalkoholgehalt = 20,9 Gew.-%, Polyvinylacetatgehalt = 1,1 Gew.-%, Alkalititer = 13 ml 0,01 m HCl/100 g PVB, Mw = 104200 g/mol, Mn = 53600 g/mol) und 130 g Triethylenglykol-di-n-heptanoat eingesetzt.
Der verwendete Vernetzer (siehe unten) bzw. dessen Konzentration (Angaben in ppm bezogen auf PVB) und die an den resultierenden Folien gemessenen Werte sind in Tabelle 1 wiedergegeben.

### Beispiele 5, 6 und 7 sowie Vergleichsbeispiel 8

Analog den Beispielen 1, 2 und 3 sowie Vergleichsbeispiel 4 (jeweils gleiches Mischungsverhältnis PVB/Weichmacher), allerdings wird ein Polyvinylbutyral mit den folgenden analytischen Kenndaten verwendet:
Polyvinylalkoholgehalt = 20,4 Gew.-%, Polyvinylacetatgehalt = 0,9 Gew.-%, Alkalititer = 24 ml 0,01 m HCl/100 g PVB, Mw = 103400 g/mol, Mn = 53200 g/mol.

Die untersuchten Vernetzungsreagenzien lassen sich anhand der allgemeinen Formel (I) beschreiben (C: R^{a} und R^{c} = t-Butyl, alle anderen Reste = Wasserstoff; A: analog C, aber R^{e} und R^{f} = Methyl; B: analog C, aber R^{f} = Methyl):
A = 5,7-Di-t-butyl-3-(3,4-dimethylphenyl)-3H-benzofuran-2-on
B = 5,7-Di-t-butyl-3-(4-methylphenyl)-3H-benzofuran-2-on
C = 5,7-Di-t-butyl-3-phenyl-3H-benzofuran-2-on

**Tabelle 1**

| Beispiel | Vernetzer | Vernetzer-Konzentration | Reißfestigkeit | Schmelzindex | Mw | Mn |
|---|---|---|---|---|---|---|
| 1 | A | 500 ppm | 30,06 | 1,93 | 111800 | 55900 |
| 2 | B | 500 ppm | 29,70 | 2,02 | 109300 | 55500 |
| 3a | C | 500 ppm | 30,23 | 1,78 | 113400 | 56100 |
| 3b | C | 1000 ppm | 30,57 | 1,57 | 117700 | 55300 |
| 3c | C | 2000 ppm | 30,75 | 1,45 | 119500 | 55100 |
| 4 | - | - | 28,12 | 2,88 | 102600 | 53400 |
| 5 | A | 500 ppm | 30,13 | 1,86 | 112500 | 55700 |
| 6 | B | 500 ppm | 29.95 | 1.96 | 111000 | 56100 |
| 7a | C | 500 ppm | 30,48 | 1,69 | 115200 | 56700 |
| 7b | C | 1000 ppm | 30,79 | 1,42 | 119900 | 55300 |
| 7c | C | 2000 ppm | 31,07 | 1,23 | 122300 | |
| 8 | - | - | 27,83 | 2,95 | 101800 | 53300 |

Die Beispiele belegen, dass PVB mit Benzofuranon-Derivaten thermisch vernetzt werden kann. Die Erhöhung des Molekulargewichts durch die Einwirkung der Vernetzungsreagenzien ist erkennbar an der Zunahme des Gewichtsmittels Mw sowie an der Abnahme der Schmelzindex-Werte. Die Vernetzungsreaktion wird begünstigt durch steigende Konzentration des Vernetzers (siehe Beispiele 3a-c bzw. 7a-c) und offenbar auch durch einen höheren Alkalititer (siehe Unterschiede zwischen den Beispielen 1-3 und 5-7). Die Vernetzungsreaktion bewirkt eine Verbesserung der mechanischen Eigenschaften von aus den Formmassen hergestellten Folien, erkennbar an der Zunahme der Reißfestigkeiten.

## Patentansprüche

1. Hochmolekulare, vernetzte Polyvinylbutyrale erhältlich durch Vernetzung eines Polyvinylbutyrals mit Benzofuranon und/oder mindestens einem Derivat desselben als Vemetzungsreagenz.

2. Polyvinylbutyrale gemäß Anspruch 1, **dadurch gekennzeichnet, dass** als Vernetzungsreagenz Verbindungen der Formel (I) 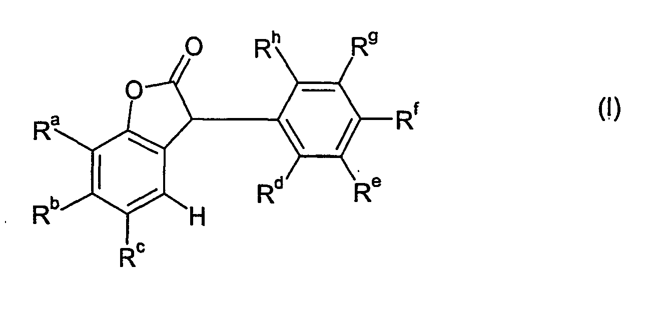 worin R^{a}, R^{b}, R^{d}, R^{e}, R^{f}, R^{g} und R^{h} unabhängig voneinander Wasserstoff, Hydroxy, C₁-C₁₈-Alkyl, unsubstituiertes oder durch C₁-C₄-Alkyl mono-, di- oder trisubstituiertes Phenyl, C₇-C₉-Phenylalkyl, unsubstituiertes oder durch C₁-C₄-Alkyl mono-, di- oder trisubstituiertes C₅-C₁₂-Cycloalkyl oder C₁-C₁₈-Alkoxy bedeuten und R^{c} eine der oben für R^{a}, R^{b}, R^{d} R^{e}, R^{f}, R^{g} und R^{h} angegebenen Bedeutungen besitzt oder einen Rest der Formel (II) 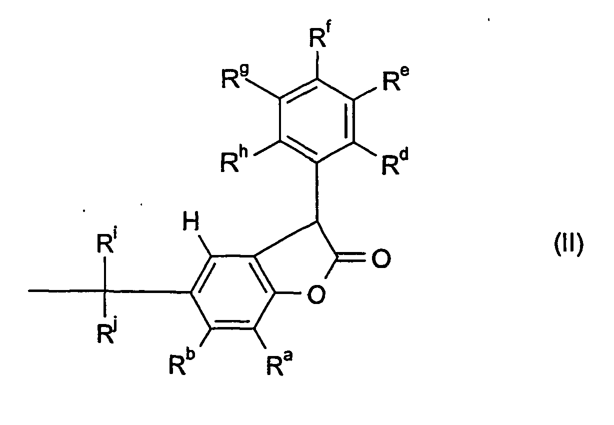 bedeutet, worin R^{a}, R^{b}, R^{d}, R^{e}, R^{f}, R^{g} und R^{h} die oben angegebenen Bedeutungen besitzen und Rⁱ und R^{j} unabhängig voneinander Wasserstoff oder C₁-C₄-Alkyl bedeuten, wobei mindestens zwei der Reste R^{d}, R^{e}, R^{f}, R^{g} und R^{h} Wasserstoff bedeuten, eingesetzt werden.

3. Polyvinylbutyrale gemäß Anspruch 1 oder 2, **dadurch gekennzeichnet, dass** als Vernetzungsreagenzien Verbindungen der Formel (I), worin
R^{b} Wasserstoff bedeutet und/oder
R^{d} bis R^{h} Wasserstoff bedeuten und/oder
R^{a} und R^{c} C₁-C₁₈-Alkyl, insbesondere tert.-Butyl, oder unsubstituiertes oder durch C₁-C₄-Alkyl mono-, di- oder trisubstituiertes Phenyl
bedeuten, eingesetzt werden.

4. Polyvinylbutyrale gemäß Anspruch 1, 2 oder 3, **dadurch gekennzeichnet, dass** als Vernetzungsreagenzien Verbindungen der Formel (I), worin R^{c} einen Rest der Formel (II) und R' und R^{j} Methyl bedeuten, eingesetzt werden.

5. Polyvinylbutyrale gemäß mindestens einem der vorhergehenden Ansprüche, **dadurch gekennzeichnet, dass** sie Weichmacher enthalten.

6. Verfahren zur Herstellung eines Polyvinylbutyrals gemäß mindestens einem der vorhergehenden Ansprüche, **dadurch gekennzeichnet, dass** das Vernetzungsreagenz sowie gegebenenfalls der Weichmacher zum Polyvinylbutyral hinzugegeben werden, die Mischung gegebenenfalls homogenisiert wird und bei Temperaturen im Bereich von 80 bis 280°C thermisch vernetzt wird.

7. Verfahren gemäß Anspruch 6, **dadurch gekennzeichnet, dass** die Vernetzung durch Zugabe alkalischer oder saurer Additive katalysiert wird.

8. Verfahren gemäß Anspruch 6 oder 7, **dadurch gekennzeichnet, dass** die thermische Vernetzung in einem Extruder durchgeführt wird.

9. Formmasse enthaltend ein Polyvinylbutyral gemäß mindestens einem der Ansprüche 1 bis 5.

10. Folie enthaltend ein Polyvinylbutyral gemäß mindestens einem der Ansprüche 1 bis 5.

11. Verwendung einer Folie gemäß Anspruch 10 zur Herstellung von Sicherheitsverbundgläsern.

## Claims

1. A high-molecular-weight, crosslinked polyvinyl butyral obtainable by crosslinking a polyvinyl butyral with benzofuranone and/or with at least one derivative of the same as crosslinking reagent.

2. The polyvinyl butyral as claimed in claim 1, wherein the crosslinking agent used comprises compounds of the formula (I) 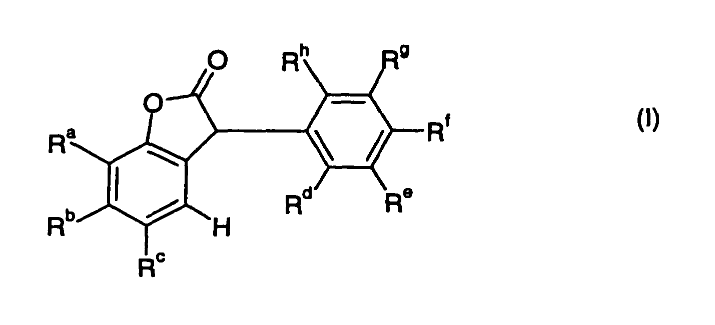 where R^{a}, R^{b}, R^{d}, R^{e}, R^{f}, R^{g} and R^{h} independently of one another are hydrogen, hydroxy, C₁-C₁₈-alkyl, unsubstituted or C₁-C₄-alkyl-mono-, -di-, or-trisubstituted phenyl, C₇-C₉-phenylalkyl, unsubstituted or C₁-C₄-alkyl-mono-, -di-, or -tri substituted C₅-C₁₂-cycloalkyl, or C₁-C₁₈-alkoxy, and R^{c} is as defined above for R^{a}, R^{b}, R^{d}, R^{e}, R^{f}, R^{g} and R^{h} or is a radical of the formula (II) 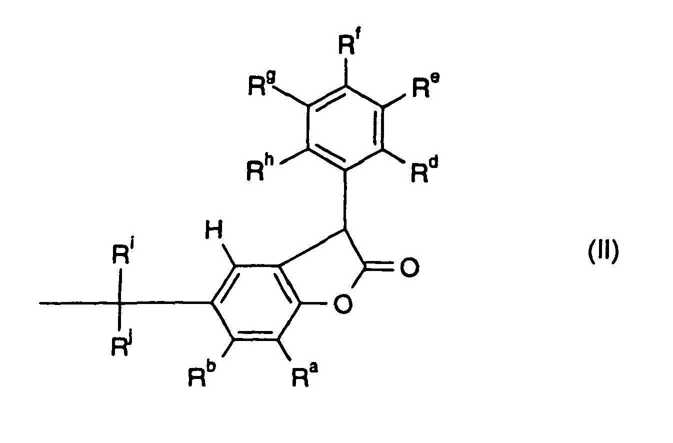 where R^{a}, R^{b}, R^{d}, R^{e}, R^{f}, R^{g} and R^{h} are as defined above and Rⁱ and R^{j} independently of one another are hydrogen or C₁-C₄-alkyl, at least two of the radicals R^{d}, R^{e}, R^{f}, R^{g} and R^{h} being hydrogen.

3. The polyvinyl butyral as claimed in claim 1 or 2, wherein the crosslinking reagents used comprise compounds of the formula (I), where
R^{b} is hydrogen, and/or
R^{d} - R^{h} are hydrogen, and/or
R^{a} and R^{c} are C₁-C₁₈-alkyl, in particular tert-butyl, or unsubstituted or C₁-C₄-alkyl-mono-, -di-, or -trisubstituted phenyl.

4. The polyvinyl butyral as claimed in claim 1, 2, or 3, wherein the crosslinking reagents used comprise compounds of the formula (I), where R^{c} is a radical of the formula (II) and Rⁱ and R^{j} are methyl.

5. The polyvinyl butyral as claimed in at least one of the preceding claims, which comprises plasticizers.

6. A process for preparing a polyvinyl butyral as claimed in at least one of the preceding claims, which comprises adding the crosslinking reagent, and also, where appropriate, the plasticizer to the polyvinyl butyral, where appropriate homogenizing the mixture, and crosslinking thermally at temperatures in the range from 80 to 280°C.

7. The process as claimed in claim 6, wherein the crosslinking is catalyzed by addition of alkaline or acidic additives.

8. The process as claimed in claim 6 or 7, wherein the thermal crosslinking is carried out in an extruder.

9. A molding composition comprising the polyvinyl butyral as claimed in at least one of claims 1 to 5.

10. A film comprising the polyvinyl butyral as claimed in at least one of claims 1 to 5.

11. The use of the film as claimed in claim 10 for producing laminated safety glass.

## Revendications

1. Polyvinylbutyrals réticulés à grande masse moléculaire, pouvant être obtenus par réticulation d'un polyvinylbutyral avec de la benzofurannone et/ou au moins un dérivé de ce dernier, en tant que réactif de réticulation.

2. Polyvinylbutyrals selon la revendication 1, **caractérisés en ce qu'**on utilise en tant que réactifs de réticulation des composés de Formule (I) 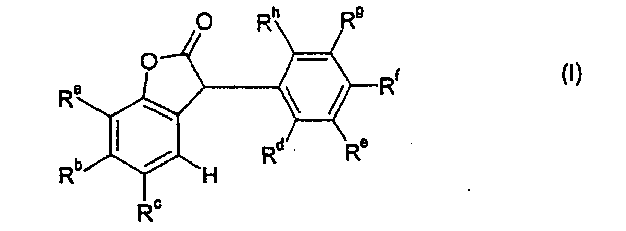 dans laquelle R^{a}, R^{b}, R^{d}, R^{e}, R^{f}, R^{g} et R^{h} représentent chacun indépendamment des autres un atome d'hydrogène, un groupe hydroxy, un radical alkyle en C₁ à C₁₈, un radical phényle non substitué, ou une fois, deux fois ou trois fois substitué par des groupes alkyle en C₁ à C₄, phénylalkyle en C₇ à C₉, cycloalkyle en C₅ à C₁₂ ou alcoxy en C₁ à C₁₈ non substitué, ou une fois, deux fois ou trois fois substitué par des groupes alkyle en C₁ à C₄, et R^{c} a l'une des significations données ci-dessus pour R^{a}, R^{b}, R^{d}, R^{e}, R^{f}, R^{g} et R^{h}, ou encore un radical de Formule (II) 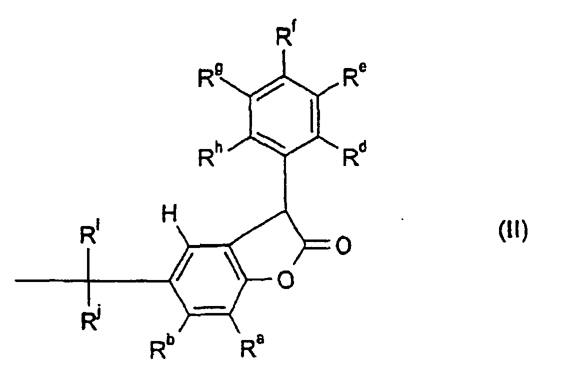 dans laquelle R^{a}, R^{b}, R^{d}, R^{e}, R^{f}, R^{g} et R^{h} ont les significations données ci-dessus, et Rⁱ et R^{j} représentent chacun indépendamment de l'autre un atome d'hydrogène ou un groupe alkyle en C₁ à C₄, au moins deux des radicaux R^{d}, R^{e}, R^{f}, R^{g} et R^{h} étant des atomes d'hydrogène.

3. Polyvinylbutyrals selon la revendication 1 ou 2, **caractérisés en ce qu'**on utilise en tant que réactifs de réticulation des composés de Formule (I) dans laquelle:
R^{b} est un atome d'hydrogène, et/ou
R^{d} à R^{h} sont des atomes d'hydrogène et/ou
R^{a} et R^{c} sont des radicaux alkyle en C₁ à C₁₈, en particulier le groupe tert-butyle, ou un groupe phényle non substitué, ou une fois, deux fois ou trois fois substitué par des groupes alkyle en C₁ à C₄.

4. Polyvinylbutyrals selon la revendication 1, 2 ou 3, **caractérisés en ce qu'**on utilise en tant que réactifs de réticulation des composés de Formule (I) dans laquelle R^{c} est un radical de Formule (II), et Rⁱ et R^{j} sont des groupes méthyle.

5. Polyvinylbutyrals selon au moins l'une des revendications précédentes, **caractérisés en ce qu'**ils contiennent des plastifiants.

6. Procédé de fabrication d'un polyvinylbutyral selon au moins l'une des revendications précédentes, **caractérisé en ce que** le réactif de réticulation, ainsi qu'éventuellement le plastifiant, sont ajoutés au polyvinylbutyral, on homogénéise éventuellement le mélange, et on le soumet à une thermoréticulation à des températures comprises dans la plage de 80 à 280°C.

7. Procédé selon la revendication 6, **caractérisé en ce que** la réticulation est catalysée par addition d'additifs alcalins ou acides.

8. Procédé selon la revendication 6 ou 7, **caractérisé en ce que** la thermoréticulation est effectuée dans une extrudeuse.

9. Mélange à mouler contenant un polyvinylbutyral selon au moins l'une des revendications 1 à 5.

10. Feuille contenant un polyvinylbutyral selon au moins l'une des revendications 1 à 5.

11. Utilisation d'une feuille selon la revendication 10 pour fabriquer des verres feuilletés de sécurité.
